# EUROPÄISCHE PATENTANMELDUNG

(11) **EP 0 647 589 A1**
(43) Veröffentlichungstag der Anmeldung: **12.04.1995**
(21) Anmeldenummer: 94115660.6
(22) Anmeldetag: 05.10.1994
(51) Int. Cl.: C01B 17/04, B01J 8/04

(54) **Verfahren zum zyklischen Betreiben von Reaktoren**

(30) Priorität: 08.10.1993 DE 4334408
(71) Anmelder: Linde Aktiengesellschaft, D-65189 Wiesbaden (DE)
(72) Erfinder: Lahne, Ulrich, Dipl.-Ing., D-82041 Deisenhofen (DE); Marold, Freimut, Dipl.-Ing., D-85521 Ottobrunn (DE); Heisel, Michael, Dr. Dipl.-Ing., D-82049 Pullach (DE); von Gemmingen, Ulrich, Dr. Dipl.-Ing., D-80803 München (DE)
(74) Vertreter: Kasseckert, Rainer

(57) **Zusammenfassung**

Die Erfindung betrifft ein Verfahren zum zyklischen Betreiben von mindestens zwei Reaktoren, wobei in den von einem Rohgasstrom durchströmten Reaktoren zumindest eine katalytische Reaktion stattfindet, bei der ein flüssiges und/oder festes Reaktionsprodukt anfällt. Dabei werden die Reaktoren in Strömungsrichtung nacheinander durchströmt und bei unterschiedlichen Temperaturen betrieben. Nach Umschalten in einen nachfolgenden Zyklus wird der im vorangehenden Zyklus zuerst durchströmte Reaktor in diesem nachfolgenden Zyklus zuletzt durchströmt. Beide Reaktoren werden bei einer Temperatur betrieben, bei der der jeweils andere Reaktor im vorangehenden Zyklus betrieben wurde. Erfindungsgemäß erfolgt in der Endphase eines Zyklus ein Vorkühlen des einen Reaktors und/oder ein Vorheizen des zweiten Reaktors, bevor die Durchströmungsreihenfolge der Reaktoren zum Zykluswechsel umgekehrt wird. Das Vorkühlen bzw. Vorheizen vor dem Zykluswechsel in den Reaktoren kann durch Zumischen eines Kühl-/Heizmediums zum Rohgasstrom (insbesondere bei adiabat betriebenen Katalysatorbetten) und/oder über Kühl-/Heizschlangen in den Reaktoren (insbesondere bei quasi-isotherm betriebenen Reaktoren) erfolgen. Das erfindungsgemäße Verfahren bietet besondere Vorteile bei der Entschwefelung eines zumindest H₂S und gegebenenfalls SO₂, COS und/oder CS₂ enthaltenden Rohgasstromes durch katalytische Umsetzung von H₂S mit SO₂ und/oder O₂ in Elementarschwefel und Wasser und gegebenenfalls durch Hydrolyse von COS und/oder CS₂.

## Beschreibung

Die Erfindung betrifft ein Verfahren zum zyklischen Betreiben von mindestens zwei Reaktoren, wobei in den von einem Rohgas durchströmten Reaktoren zumindest eine katalytische Reaktion stattfindet, bei der ein flüssiges und/oder festes Reaktionsprodukt anfällt, wobei die Reaktoren in Strömungsrichtung nacheinander durchströmt und bei unterschiedlichen Temperaturen betrieben werden, wobei nach Umschaltung in einen nachfolgenden Zyklus der im vorangehenden Zyklus zuerst durchströmte Reaktor in diesem nachfolgenden Zyklus zuletzt durchströmt wird und wobei beide Reaktoren bei einer Temperatur betrieben werden, bei der der jeweils andere Reaktor im vorangehenden Zyklus betrieben wurde.

Bei zahlreichen industriellen Prozessen werden katalytische Reaktionen eingesetzt, die zu einem festen oder flüssigen Reaktionsprodukt führen. Die Reaktion wird dabei durch Temperaturwechsel beeinflußt, da in der Regel die Gleichgewichtslage der Reaktion von der Temperatur abhängt. Bei exothermen Reaktionen liegt die optimale Gleichgewichtslage der gewünschten Reaktionen in vielen Fällen bei einer anderen Temperatur als der, die sich in einem adiabat betriebenen Reaktor einstellen würde. Da sich die Reaktoren im Adsorptionsbetrieb durch das bei der Reaktion anfallende Reaktionsprodukt langsam zusetzen, werden üblicherweise mindestens zwei Reaktoren verwendet, wobei gleichzeitig ein Reaktor im Adsorptionsbetrieb und der zweite Reaktor im Regenerierbetrieb bei unterschiedlichen Temperaturen arbeiten.

Ein Beispiel für einen derartigen Prozeß stellt die Schwefelgewinnung entsprechend der exothermen Claus-Reaktion dar. Dabei wird H₂S mit SO₂ zu Elementarschwefel und Wasser umgesetzt. Das Verfahren ist beispielsweise in ''Das CLINSULF®-Verfahren zur Schwefelrückgewinnung", Linde-Berichte aus Technik und Wissenschaft, Hr. 62, 1988, Seiten 33 bis 38, beschrieben. In dem beispielsweise in Bild 5 dargestellten Verfahrensschema werden zwei Reaktoren hintereinander von einem Gasstrom bei unterschiedlichen Temperaturen durchströmt, wobei der zuerst durchströmte Reaktor im Regenierbetrieb und der zuletzt durchströmte Reaktor im Adsorptionsbetrieb arbeiten. Sowohl bei adiabat als auch bei quasi-isotherm betriebenen Reaktoren arbeitet der zuletzt durchströmte Reaktor bei Temperaturen unterhalb des Schwefeltaupunktes im sogenannten SDP-Betrieb (Sub Dew Point = SDP). Im SDP-Betrieb beträgt die Temperatur im zweiten Reaktor ca. 125°C. Der zuerst durchströmte Reaktor wird zum Regenieren des Katalysatorbettes bei ca. 300 bis 390°C im heißesten Bereich betrieben. Bei quasi-isotherm betriebenen Reaktoren kann der in Strömungsrichtung zuletzt durchströmte Reaktor im sogenannten SSP-Betrieb (Sub Solid Point = SSP) bei Temperaturen unterhalb des Schwefelfestpunktes betrieben werden. Am Reaktoraustritt treten dabei Temperaturen von etwa 90 bis 100°C auf. Neben der Desorption des im Katalysatorbett gespeicherten Elementarschwefels (Regenerieren) wird im zuerst durchströmten Reaktor der überwiegende Teil des im Rohgas enthaltenen H₂S und SO₂ entsprechend der Claus-Reaktion umgesetzt. Der Schwefel wird anschließend bei ca. 150°C kondensiert und abgeschieden. Im zuletzt durchströmten Reaktor wird restlicher im Rohgas enthaltener Schwefel wegen der niedrigen Temperaturen vollständig adsorbiert und zurückgehalten. Wenn die Schwefelbeladung im Reaktor zu groß wird, nimmt das Rückhaltevermögen des Reaktors für Schwefel ab. Bei Unterschreitung eines vorgegebenen Grenzwertes wird die Durchströmungsrichtung der Reaktoren gewechselt. Dabei übernimmt in diesem nächsten Zyklus der im vorangehenden Zyklus regenerierte Reaktor die Funktion des Reaktors im Adsorptionsbetrieb. Gleichzeitig wird nun der im vorangehenden Zyklus beladene Reaktor regeneriert. In der Regel werden die Reaktoren so ausgelegt, daß eine Umschaltung nur in größeren Zeitabständen, beispielsweise 24 Stunden, nötig ist. Während des Umschaltens der beiden Reaktoren beim Zykluswechsel von einem Betriebszustand in den anderen treten allerdings kurzzeitig schlechtere Schwefelrückgewinnungsraten auf. Dies liegt daran, daß der nach einem Zykluswechsel im Regenerierbetrieb arbeitende Reaktor sich noch auf hoher Temperatur befindet. Das hohe Temperaturniveau des nach dem Zykluswechsel zuletzt durchströmten Reaktors wirkt sich ungünstig auf die Gleichgewichtslage der Claus-Reaktion aus, so daß bis zu einer ausreichenden Auskühlung des Reaktors keine Schwefeladsorption im Reaktor stattfindet. Gleichtzeitig bewirkt der im vorangehenden Zyklus im Adsorberbetrieb arbeitende Reaktor ebenfalls einen geringeren Schwefelumsatz, da das Katalysatorbett noch zu kalt ist und die Reaktionsgeschwindigkeit niedrig ist. Zusätzlich führen die Wärmeträgheit der Katalysatorschüttungen und der Reaktoren sowie die Reaktions- und Sorptionswärmen zu Zeitverzögerungen und damit zu einem geringeren Schwefelumsatz.

Der vorliegenden Erfindung liegt daher die Aufgabe zugrunde, ein Verfahren der Eingangs genannten Art aufzuzeigen, bei welchem verhindert wird, daß beim Zykluswechsel ein merklicher Rückgang des Umsatzes des Reaktionsproduktes auftritt.

Das Vermeiden eines Absackens der Umsatzrate des Reaktionsprodukts soll dabei auf möglichst einfache Art und Weise erfolgen.

Diese Aufgabe wird erfindungsgemäß dadurch gelöst, daß in der Endphase eines Zyklus ein Vorkühlen des einen Reaktors und/oder ein Vorheizen des zweiten Reaktors erfolgt, bevor die Durchströmungsreihenfolge der Reaktoren beim Zykluswechsel umgekehrt wird.

Überraschenderweise hat sich nämlich gezeigt, daß bei einer Voreinstellung der Temperaturen der Reaktoren kurz vor dem Zykluswechsel das Absinken der Umsatzrate des Reaktionsproduktes unterbunden werden kann, gleichzeitig aber eine Temperaturänderung in den Reaktoren kurz vor dem Zykluswechsel nicht zu einer merklichen Einbuße des Reaktionsproduktsumsatzes führt. Als geeignet hat sich dabei ein Vorkühlen bzw. Vorheizen der Reaktoren vor dem Zykluswechsel durch Zumischen eines Kühl-/Heizmediums, insbesondere eines Kühlgases/Heißgases, zum Rohgasstrom und/oder über Kühl-/Heizschlangen in den Reaktoren bewährt. Die Reaktoren können adiabat und/oder quasi-isotherm betriebene Katalysatorbetten enthalten. Über das Zumischen eines Heiz- bzw. Kühlmediums kann eine Temperaturänderung der adiabat betriebenen Katalysatorbetten erreicht werden. Das Vorheizen der adiabat betriebenen Katalysatorbetten bringt insbesondere auch für ungewöhnliche Betriebszustände wie beispielsweise das Anfahren oder den Betrieb bei Unterlast Vorteile. Quasi-isotherm betriebene Katalysatorbetten sind mit Kühl- bzw. Heizschlangen versehen, über die ein Kühl- bzw. Heizmedium zum indirekten Kühlen bzw. Heizen der quasi-isotherm betriebenen Katalysatorbetten geleitet wird.

Mit besonderem Vorteil wird das erfindungsgemäße Verfahren zur Schwefelrückgewinnung eingesetzt, wobei zur Entschwefelung eines zumindest H₂S und gegebenenfalls SO₂, COS und/oder CS₂ enthaltenden Rohgasstromes in den Reaktoren eine katalytische Umsetzung von H₂S mit SO₂ und/oder O₂ in Elementarschwefel und Wasser und gegebenenfalls eine Hydrolyse von COS und/oder CS₂ durchgeführt werden. Die Umsetzung von H₂S mit SO₂ erfolgt entsprechend der Claus-Reaktion, die Umsetzung mit O₂ durch eine ebenfalls exotherme Direktoxidation. Bevorzugt findet die Umsetzung von H₂S mit SO₂ und/oder O₂ in quasi-isotherm betriebenen Katalysatorbetten und gegebenenfalls die Hydrolyse in adiabat betriebenen Katalysatorbetten statt. Die Anwendung des erfindungsgemäßen Verfahrens für die Schwefelrückgewinnung ist von besonderer Bedeutung, da Vorschriften zur Reinhaltung der Luft, wie z.B. die TA-Luft, nur die Abgabe einer sehr geringen Menge an Schwefel erlauben und eine sehr hohe Schwefelrückgewinnungsrate verlangen. Gerade deshalb muß beim Umschalten der Durchströmungsreihenfolge der Reaktoren beim Zykluswechsel für die Schwefelrückgewinnung gewährleistet werden bzw. bleiben, daß die gesetzlich geforderten oder garantierten Rückhaltewerte eingehalten werden. Der Schwefelschlupf muß beispielsweise kleiner als 0,5% sein und darf höchstens im Halbstundenmittel um 0,1% auf 0,6% ansteigen.

In Weiterbildung der Erfindung wird daher die Vorkühl- bzw. Vorheizzeit so bemessen, daß sie 0,1 bis 20%, bevorzugt 0,1 bis 10%, der Laufzeit eines Zyklus betragen.

Zum Vorkühlen bzw. Vorheizen der quasi-isotherm betriebenen Katalysatorbetten hat sich als durch die Kühl- bzw. Heizschlangen des Reaktors strömendes Hilfsmedium Dampf, Thermoöl, Wasser oder Gas bewährt. Die Änderung der Kühlschlangentemperatur des zuerst durchströmten Reaktors, d.h. die Vorkühlung dieses Reaktors, wird bei der Verwendung von Dampf durch Druckänderung, bei der Verwendung von Thermoöl durch Kreislaufmischungen und bei Wasser- bzw. Gasströmen durch Umschalten und eventuell durch Mischen erreicht.

Mit Vorteil erfolgt das Vorheizen des adiabat betriebenen Katalysatorbettes durch Zumischen eines heißen H₂S und/oder gegebenenfalls SO₂, O₂, COS und/oder CS₂ enthaltenen Gasstromes. Bevorzugt wird das adiabat betriebene Katalysatorbett durch im Bypass geführtes heißes Rohgas erwärmt. Für die Zumischung von Heißgas hat sich gezeigt, daß besonders günstige Ergebnisse erzielt werden können, wenn die Zumischzeit des heißen Gasstromes 0,1 bis 10%, bevorzugt 0,1 bis 1%, der Laufzeit eines Zyklus beträgt.

Wie oben bereits ausgeführt, wird die Laufzeit in einem Zyklus, d.h. eine Betriebsperiode oder Zyklusdauer, möglichst lange gewählt. Der Beginn der Vorkühlung des zuerst durchströmten Reaktors vor dem Zykluswechsel hängt dabei von der Rohgasmenge, dem Gehalt an Schwefelverbindungen, insbesondere dem H₂S-Gehalt, dem Druck, der mittleren Temperatur im Reaktor, sowie der Reaktorgröße bzw. der Katalysatormasse ab.

Im folgenden sollen die Vorteile des erfindungsgemäßen Verfahrens gegenüber dem Stand der Technik anhand des Beispiels der Schwefelrückgewinnung gezeigt werden.

Hierbei zeigt:

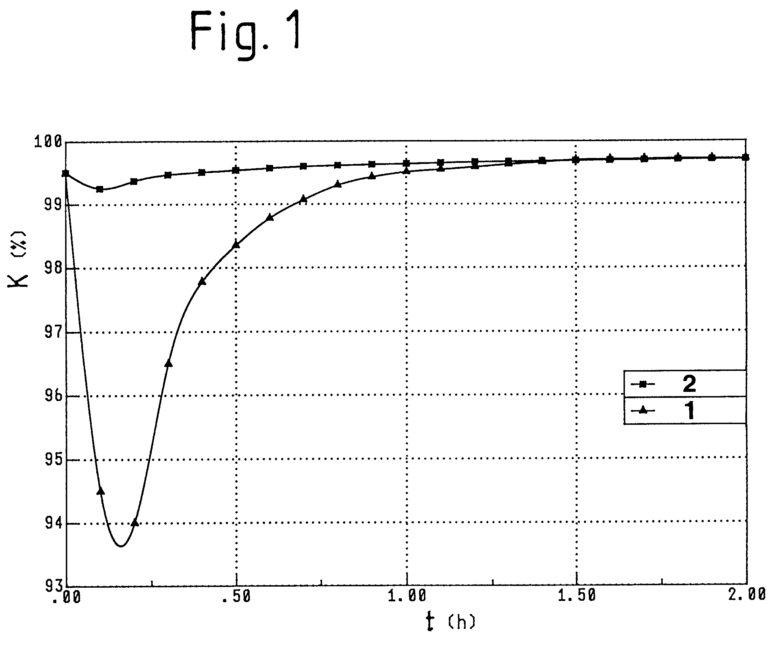

- Fig. 1:: Ein Diagramm zur H₂S-Konversion eines Reaktors.

Fig.1 stellt den H₂S-Konversionsgrad des zuletzt durchströmten Reaktors kurz nach der Umschaltung beim Zykluswechsel dar. Dabei ist der H₂S-Konversionsgrad K in % über der Laufzeit t in Stunden h aufgetragen. Der mit dreieckigen Symbolen dargestellte Graph 1 zeigt deutlich die Abnahme der Schwefelumsetzung im Verfahren nach dem Stand der Technik, d.h. ohne Vorkühlung des Reaktors vor der Umschaltung beim Zykluswechsel. Die H₂S-Umsatzrate sinkt im dargestellten Beispiel auf Werte unter 94% ab. Dies liegt daran, daß kurz nach der Umschaltung beim Zykluswechsel beide Reaktoren in Folge der Wärmeträgheit der Schüttungen, sowie der Desorptionskälte noch im Sinne der Prozeßführung falsche Temperaturen aufweisen. Dies trifft auf den zuerst durchströmten, noch kalten Reaktor zu, der aufgrund stark verringerter Kinetik zu wenig H₂S (und COS und/oder CS₂) pro Zeit umsetzt. Dies gilt aber ebenso für den im Diagramm betrachteten zweiten Reaktor, weil aufgrund seiner noch zu hohen Temperatur das Reaktionsgleichgewicht ungünstig liegt. Die Folge ist der im Diagramm deutlich sichtbare erhöhte Schlupf an H₂S und auch an Elementarschwefel, bis sich die richtigen Temperaturprofile in den Reaktoren eingestellt haben. Dies kann je nach Auslegung bei Gesamtlaufzeiten eines Zyklus von 20 bis 50h zwischen 0,5 und 2h dauern.

Der mit quadratischen Symbolen gekennzeichnete Graph 2 gibt den Verlauf der H₂S-Konversion bei erfindungsgemäßer Verfahrensführung wieder. Der zuerst durchströmte Reaktor wird vor dem Umschalten des Zykluswechsel vorgekühlt. Das im Diagramm gezeigte Ergebnis bestätigt, daß die H₂S-Konversion nach dem Umschalten beim Zykluswechsel nur unwesentlich abfällt.

In dem dem Diagramm aus Fig.1 zugrunde liegenden Beispiel wurde ein Rohgasstrom mit 2000 Nm³/h, mit einer Eintrittstemperatur von 200°C, mit einem Druck von 1,2 bar und mit einem H₂S-Gehalt von 6 Vol.-% über einen Katalysator mit einer Masse von 5000 kg pro Reaktor geleitet. Die Laufzeit eines Zyklus betrug 30 Stunden. Die Vorkühlung des zuerst durchströmten Reaktors erfolgte über die letzten 2 Stunden der Laufzeit des Zyklus.

## Patentansprüche

1. Verfahren zum zyklischen Betreiben von mindestens zwei Reaktoren, wobei in den von einem Rohgasstrom durchströmten Reaktoren zumindest eine katalytische Reaktion stattfindet, bei der ein flüssiges und/oder festes Reaktionsprodukt anfällt, wobei die Reaktoren in Strömungsrichtung nacheinander durchströmt und bei unterschiedlichen Temperaturen betrieben werden, wobei nach Umschaltung in einen nachfolgenden Zyklus der im vorangehenden Zyklus zuerst durchströmte Reaktor in diesem nachfolgenden Zyklus zuletzt durchströmt wird und wobei beide Reaktoren bei einer Temperatur betrieben werden, bei der der jeweils andere Reaktor im vorangehenden Zyklus betrieben wurde, **dadurch gekennzeichnet,** daß in der Endphase eines Zyklus ein Vorkühlen des einen Reaktors und/oder ein Vorheizen des zweiten Reaktors erfolgt, bevor die Durchströmungsreihenfolge der Reaktoren beim Zykluswechsel umgekehrt wird.

2. Verfahren nach Anspruch 1, dadurch gekennzeichnet, daß das Vorkühlen bzw. Vorheizen der Reaktoren vor dem Zykluswechsel durch Zumischen eines Kühl-/Heizmediums, insbesondere eines Heißgases/Kühlgases, zum Rohgasstrom und/oder über Kühl-/Heizschlangen in den Reaktoren erfolgt.

3. Verfahren nach einem der Ansprüche 1 oder 2, dadurch gekennzeichnet, daß die Reaktoren adiabat und/oder quasi-isotherm betriebene Katalysatorbetten enthalten.

4. Verfahren nach einem der Ansprüche 1 bis 3, dadurch gekennzeichnet, daß zur Entschwefelung eines zumindest H₂S und gegebenenfalls SO₂, COS und/oder CS₂ enthaltenden Rohgasstromes in den Reaktoren eine katalytische Umsetzung von H₂S mit SO₂ und/oder O₂ in Elementarschwefel und Wasser und gegebenenfals eine Hydrolyse von COS und/oder CS₂ durchgeführt wird.

5. Verfahren nach Anspruch 4, dadurch gekennzeichnet, daß die Umsetzung von H₂S mit SO₂ und/oder O₂ in quasi-isotherm betriebenen Katalysatorbetten und gegebenenfalls die Hydrolyse in adiabat betriebenen Katalysatorbetten durchgeführt werden.

6. Verfahren nach einem der Ansprüche 1 bis 5, dadurch gekennzeichnet, daß die Vorkühl- bzw. Vorheizzeit 0,1 bis 20%, bevorzugt 0,1 bis 10%, der Laufzeit eines Zyklus betragen.

7. Verfahren nach einem der Ansprüche 2 bis 6, dadurch gekennzeichnet, daß zum Vorkühlen bzw. Vorheizen der quasi-isotherm betriebenen Katalysatorbetten ein Hilfsmedium wie beispielsweise Dampf, Thermoöl, Wasser oder Gas durch die Kühl-/Heizschlangen geleitet wird.

8. Verfahren nach einem der Ansprüche 2 bis 7, dadurch gekennzeichnet, daß das Vorheizen des adiabat betriebenen Katalysatorbettes durch Zumischen eines heißen H₂S und/oder gegebenenfalls SO₂, O₂, COS und/oder CS₂ enthaltenen Gases erfolgt, bevorzugt über einen Bypass eines heißen Rohgasstromes.

9. Verfahren nach Anspruch 8, dadurch gekennzeichnet, daß die Zumischzeit des heißen Gasstromes 0,1 bis 10%, bevorzugt 0,1 bis 1%, der Laufzeit eines Zyklus beträgt.
